(19) Europäisches Patentamt
European Patent Office
Office européen des brevets

(11) EP 0 437 827 B1

(12) **EUROPÄISCHE PATENTSCHRIFT**

(45) Veröffentlichungstag und Bekanntmachung des Hinweises auf die Patenterteilung:
**14.08.1996 Patentblatt 1996/33**

(21) Anmeldenummer: **90125389.8**

(22) Anmeldetag: **07.05.1986**

(51) Int Cl.6: **C08G 63/42**, C08G 63/66, C08G 63/68, C08G 18/81, C08G 18/42, C09J 175/16, C08F 283/01, C08G 63/91

(54) **Strahlenhärtbare Makromere auf der Basis von (meth)acrylfunktionellen Polyestern und deren Verwendung**

Radiation-polymerisable macromers from polyesters with (meth)acryl groups and their use

Macromères polymérisables par rayonnement à base de polyesters à fonction (méth)acrylique et leur usage

(84) Benannte Vertragsstaaten:
**AT BE CH DE FR GB IT LI LU NL SE**

(30) Priorität: **07.05.1985 DE 3516351**
**18.04.1986 DE 3613082**

(43) Veröffentlichungstag der Anmeldung:
**24.07.1991 Patentblatt 1991/30**

(62) Anmeldenummer der früheren Anmeldung nach Art. 76 EPÜ: **86106288.3**

(73) Patentinhaber: **HÜLS AKTIENGESELLSCHAFT**
**D-45764 Marl (DE)**

(72) Erfinder:
- **Huber, Hans, Dr.**
  **W-5204 Lohmar (DE)**
- **Müller, Hartmut, Dr.**
  **NY 07739 (US)**

(56) Entgegenhaltungen:

| | |
|---|---|
| **EP-A- 0 002 866** | **EP-A- 0 054 105** |
| **EP-A- 0 089 913** | **EP-A- 0 201 100** |
| **EP-A- 0 208 856** | **AU-A- 479 061** |
| **FR-A- 2 121 191** | **FR-A- 2 139 091** |
| **FR-A- 2 324 669** | **FR-A- 2 361 450** |
| **US-A- 3 664 861** | **US-A- 3 673 140** |
| **US-A- 4 035 320** | **US-A- 4 451 627** |


Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Gegenstand der vorliegenden Erfindung sind strahlungshärtbare, (meth)acrylgruppenfunktionelle Polyester, die in der Hauptkette verzweigt sind und/oder aliphatische Seitenketten besitzen und deren Hydroxylgruppen zu maximal 70% durch strahlenhärtbare funktionelle Gruppen ersetzt worden sind.

(Meth)acrylfunktionelle Polyester bzw. Polyesterurethane sind bekannt. Sie dienen in erster Linie als Rohstoffe für Lacke, die mit Reaktivverdünnern und Photoinitiatoren zu harten Filmen vernetzt werden. Ohne reaktive Monomere werden sie überwiegend aus Lösungen verarbeitet. Durch Zusätze klebrigmachende Harze können mit solchen (meth) acrylierten Oligo- oder Polymeren auch oberflächenklebrige Beschichtungen hergestellt werden.

Die Verfahren zur Herstellung makromerer d.h. mit Hilfe ihrer funktionellen Gruppen strahlenhärtbarer Polymerer aus Polymeren sind vielfältig. So werden nach DE-OS 28 38 691 und DE-OS 30 00 308 Herstellwege durch Veresterung von Hydroxylpolyestern mit Acrylsäure beschrieben. Die Problematik dieses Verfahrens liegt darin, daß diese Veresterungsreaktionen nicht vollstänig abläuft und somit nicht umgesetzte Monomere entweder durch komplizierte Destillationsverfahren entfernt oder durch Reaktion mit z.B. Epoxiden gebunden werden müssen. Ein Verfahren, das beide Wege vereint, wird in der EP-PS 0 054 105 beschrieben.
Ein anderes Verfahren ist die Umsetzung von Hydroxylpolyestern mit Säureanhydriden und danach mit Glycidylestern von (meth)acrylfunktionellen Monomeren nach der US-PS 4,158,618, wobei durch Verwendung von halogenierten, cyclischen Anhydriden ein interner Photoinitiator in das Polymere eingebaut wird.
Häufig erfolgt die Einführung von (Meth)acrylgruppen in Polyester über Diisocyanate, wobei entweder Isocyanatpräpolymer hergestellt wird, das im weiteren mit einem Hydroxyalkyl(meth)acrylat abreagiert wird, oder der Polyester mit einem Addukt aus Diisocyanat und Hydroxyalkyl(meth)acrylat umgesetzt wird (US-PS 4,174,307 und US-PS 4,164,486).

In der US-PS 4,174,307 werden (meth)acrylgruppenhaltige Monomere oder Oligomere mit sehr niedrigen Molekulargewichten verwendet. Bei den (meth)acrylierten Polyestern nach der US-PS 4,164,486 handelt es sich um solche, die zur Verbesserung ihrer Metallhaftung Dimerfettsäure und ethoxyliertes Bisphenol A enthalten. Aufgrund ihrer Zusammensetzung sind diese Produkte beim Raumtemperatur fest und weisen bei höheren Molekulargewichten so große Viskositäten auf, daß sie nur aus Löung und/oder mit Zusätzen monomerer Reaktivverdünner verarbeitet werden können. Die Herstellung acrylfunktioneller Polyether durch Umsetzung mit Isocyanatoalkyl(meth)acrylat beschreibt die US-PS 4,233,425.

Den bekannten (meth)acryl-gruppenhaltigen Polyestern, die über Diisocyanate zugängig sind, ist gemeinsam, daß sie entweder überwiegend linear durch die funktionelle Polyesterbestandteile aufgebaut sind oder im Falle einer Verzweigung der Hauptkette aus Polyestern geringer Kondensationsgrade entstehen. Soweit nach der Funktionalisierung, besonders im Falle verzweigter höhermolekularer Basispolyester hohe Viskositäten auftreten, werden die Produkte aus Lösung und/oder mit großen Zusätzen monomerer Reaktivverdünner verarbeitet. Um bei Beschichtungen harte, kratzfeste Filme nach der Vernetzung zu erhalten, werden weitere ungesättigte Monomere eingebaut und/oder Hydroxylgruppen trotz der genannten Schwierigkeiten möglichst vollständig durch polymerisationsfähige Acrylgruppen substituiert.

In der FR-A-2 121 191 ist ein Verfahren zur Herstellung von Überzügen durch Härtung mit ionisierender Strahlung beschrieben. Hierbei werden hydroxylgruppenhaltige Verbindungen mit Vinylisocyanat oder vinylisocyanatgruppenhaltigen Polymeren oder Copolymeren umgesetzt. Die Reaktion wird so ausgeführt, daß so viele Hydroxylgruppen wie möglich, mindestens zwei pro Molekül, zu endständigen Vinylurethangruppen umgesetzt werden.

Es bestand daher die Aufgabe, (meth)acrylgruppenhaltige Makromere auf der Basis von Polyestern zu entwickeln, die bei bzw. trotz höherem Molekulargewicht bei Raumtemperatur noch flüssig sind und somit lösungsmittelfrei verarbeitet werden können. Gleichzeitig sollte auch bei unvollständigem Ersetzen der Hydroxylgruppen des Polyesters durch ungesättigte Gruppen enthaltende Isocyanate ohne monomere Reaktivverdünner und Photoinitiatoren durch Elektronenbestrahlung ein ausreichender Kohäsionsaufbau der Polyester bewirkt werden.

Die gestellte Aufgabe konnte dadurch gelöst werden, daß solche Basispolyester verwendet werden, die über Esterbrücken oder ggf. Etherbrücken an die Hauptkette gebundene, aliphatische Seitenketten tragen. Diese Polyester müssen, um eine genügende Kohäsion zu gewährleisten, Molekulargewichte von 1.000 bis 10.000 besitzen. Durch die Verzweigung der Hauptkette genügt es weiterhin, die ursprünglich vorhandenen Hydroxylgruppen des Polyesters zu 30 bis 70 % durch polymerisationsfähige, ungesättigte, funktionelle Gruppen zu ersetzen, die bei Strahleneinwirkung reaktiv härten. Ein Zusatz weiterer monomerer ungesättigter Verbindungen zur Erreichung einer vollständigen Vernetzung ist also nicht erforderlich. Um wiederum auch bei höheren Molekulargewichten noch flüssige Produkte zu erhalten, muß es sich bei den Basispolyestern um amorphe Produkte mit Glasumwandlungstemperaturen unter 0 °C, vorzugsweise unter -20 °C, handeln. Dies kann nun einerseits durch die Wahl überwiegend aliphatischer Polycarbonsäuren und Polyolen erreicht werden. Beispiele für solche aliphatischen Bausteine sind Dicarbonsäurediole mit Alkylseitenketten von 2 bis 18 Kohlenstoffatomen, sowie Triole wie etwa Trimethylolpropan, Glycerin, Pentaerythrit u.a.. Ebenso elegant ist jedoch die Einführung aliphatischer Seitenketten, die über Partialester einer Polycarbonsäure mit aliphatischen Monoalkoholen oder über Partialester eines Polyols mit aliphatischen Monocarbonsäuren oder ggf. über Partialether von Polyolen mit aliphatischen Monoalkoholen möglich ist, wobei der Aufbau der Partialester so beschaffen ist, daß eine durchschnittliche Funktionalität von 2 bis 3 resultiert. Als Funktionalität von 2 wird dabei die eines linearen unverzweigten Polyesters verstanden, bei dem die Zahl der Polyesterbindungen eine Einheit aus Polycarbonsäure und Polyol 2 beträgt, wobei entweder keine weiteren Carboxyl-bzw. Hydroxylgruppen an dieser Einheit vorhanden sind oder durch Monocarbonsäuren bzw. Monoalkohole verschlossen sind. Entsprechend resultiert eine Funktionalität von 3 an einer solchen Polyestereinheit aus Polycarbonsäure + Polyalkohol, wenn an dieser Einheit in Mitte über eine weitere Carboxyl- oder Hydroxylgruppe eine Seitenkette des Polyesters gebunden ist.

Gegenstand der Erfindung sind daher strahlenhärtbare Makromere auf der Basis von (meth)acrylfunktioneller Polyester, dadurch gekennzeichnet, daß

a) Hydroxylgruppen enthaltende Basispolyester mit mittleren Molekulargewichten von 1.000 bis 10.000 und bei 20° C flüssigem Zustand, welche Alkylseitenketten mit 4 bis 36 C-Atomen in der Alkylgruppe über Estergruppen oder Etherbrücken von dritten oder höheren polyesterbildenden Funktionen an die Hauptkette gebunden enthalten, zu 30 bis 70 % der Hydroxylgruppen der Polyester nach a) mit Acrylatverbindungen oder Methacrylatverbindungen umgesetzt sind, wobei

$b_1$) Isocyanatoalkyl(meth-)acrylat und/oder

$b_2$) Addukten aus Di- oder Triisocyanaten oder Polyisocyanaten oder Isocyanatopraepolymeren von Polyestern oder Polyethern mit niedrigem Molekulargewicht mit Hydroxylalkylacrylaten bzw.Hydroxyalkylmethacrylaten und/oder

$b_3$) Methyl-acrylamidoglykolat-methylether und/oder

$b_4$) nach Umsetzung von 30 bis 70 % der Hydroxylgruppen der Polyester mit einer Dicarbonsäure, Tricarbonsäure oder deren Anhydriden mit den so gebildeten Carboxylgruppen unter Bildung von Carboxylgruppen mit Glycidylacrylat oder Glycidylmethacrylat und/oder

$b_5$) mit Ethacrylsäure oder Acrylsäure oder deren Derivaten verwendet sind.

Als Estersegment der Polyester wird dabei die sich wiederholende Gruppierung

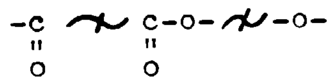

aus Di -oder Tricarbonsäure und $\nsim$ als deren Kohlenwasserstoffrest und einem Di- oder Triol mit $\sim$ als deren Kohlenwasserstoffrest verstanden, wobei die Alkylseitenkette über eine dritte polyesterbildende Funktion, d.h. eine dritte Carboxylgruppe der Tricarbonsäure oder eine dritte Hydroxylgruppe des Triols gebunden ist.

Die neuen Polyester sind unvernetzt und weitgehend linear d.h. aus unverzweigten Hauptketten mit nur vergleichsweise geringer, durch trifunktionelle Glieder der Hauptkette bedingter Kettenverzweigung, aufgebaut, obgleich Tricarbonsäuren bzw. höhere Polycarbonsäuren und ggf. Triole bzw. höher funktionelle Polyole notwendig mitzuverwenden sind.

Die neuen Basispolyester weisen ganz oder überwiegend eine Kammstruktur - in vereinfacht gesehener ebener Projektion - auf bzw. eine Struktur, in der die Alkylseiten ketten in möglichst regelmäßiger, statistischer Anordnung aus der im wesentlichen linearen und unverzweigten Hauptkette der Polyester herausragen.

In den erfindungsgemäßen Polyestern stammen die Alkylseitenketten aus Monocarbonsäureresten oder aus Monoalkanolresten, die an dritte Funktionen, d.h. Carboxylgruppen oder Etherbrücken von Tricarbonsäuren oder ggf. Tetracarbonsäuren, oder von Triolen oder ggf. Tetraolen in den Estersegmenten gebunden sind. Die Alkylseitenketten sind im wesentlichen gleichmäßig entlang der Hauptkette der Polyester gebunden, d.h. die Estersegmente der Hauptkette aus Di- bzw. Polycarbonsäuren, Di- bzw. Polyolen und Dihydroxy-mono- bzw. Hydroxydicarbonsäuren besitzen zumindest teilweise Carboxyl- oder Ethergruppen mit daran gebundenen Alkylresten der Monocarbonsäure bzw. Monoalkohole.

Es ist erfindungsgemäß erforderlich, daß im wesentliche eine Funktionalität der polyesterbildenden Bestandteile von lediglich 2 oder wenig mehr in der Polyesterhauptkette vorliegt, d.h. daß lediglich 2 Carboxylgruppen der Polycarbonsäuren bzw. lediglich 2 Hydroxylgruppen der Polyole oder lediglich durchschnittlich 2 polyesterbildende Hydroxyl- bzw. Carboxylgruppen einer Hydroxypolycarbonsäure in der Hauptkette der Polyester gebunden sind, obgleich als Ausgangsstoffe Tricarbonsäuren bzw. höhere Polycarbonsäuren und Triole bzw. höhere Polyole zusätzlicl zu Dicarbonsäuren und Diolen verwendet werden. Die dritte Carboxylgruppe der Tricarbonsäuren und 3 OH-Gruppe der Triole trägt durch Wahl der Ausgangsstoffe und Herstellbedingungen die genannten Alkylseitenkette.

Es ist daher erfindungsgemäß vorgesehen, vorzugsweise Alkylester von mindestens trifunktionellen Carbonsäuren, ins besondere Monoester von Tricarbonsäuren und Diester von Tetracarbonsäuren, jedoch auch Dialkylester von Tricarbonsäuren und ggf. Trialkylester von tetrafunktionellen Carbonsäuren bzw. aliphatische Monoester von Triolen und Diester von Tetraolen, jedoch auch Diester aliphatischer Carbonsäuren von Triolen und Triester aliphatischer Carbonsäuren von Tetraolen als Ausgangsstoffe neben den üblichen Dicarbonsäuren und Diolen bzw. Hydroxycarbonsäuren zu verwenden. Bevorzugt sind Glycidylester von Monocarbonsäuren und Mono- bis Trialkylester von Tricarbonsäuren, wobei bei der Polyesterbildung eine Alkylestergruppe der Monocarbonsäure im Polyester erhalten bleibt, während weitere Alkyl-estergruppen in üblicher Weise abgespalten werden. Weiter bevorzugt sind Trimethylolpropanester von Monocarbonsäuren. Erfindungsgemäß ist es jedoch in vielen Fällen auch möglich, anstelle von besonders Monoestern von Polycarbonsäuren bzw. Monocarbonsäureestern von Polyolen von den Einzelkomponenten Tri- und höhere Polycarbonsäuren plus Monoalkohol bzw. Triol oder höhere Polyole plus Monocarbonsäure auszugehen, selbst Kombinationen von Polycarbonsäure und Monocarbonsäure bzw. Polyol und Monoalkanol sind möglich. Diese Verfahrensweise ist nicht bevorzugt.

Erfindungsgemäß ist es entschieden bevorzugt, zum Aufbau der Alkylseitenketten verzweigte Alkohole in Form ihrer Ester oder als Einzelkomponente oder verzweigte Monocarbonsäuren als deren Ester oder als Einzelkomponente einzusetzen.

Als Ausgangsstoffe können bekannte aliphatische Di-, Tri und höhere Polycarbonsäuren, aromatische Di-, Tri- und Polycarbonsäuren, Dihydroxy-monocarbonsäuren und Hydro35 xydicarbonsäuren sowie Mono- und Dialkylester der genannten Di- und höher funktionellen Carbonsäuren, Mono-, bzw. Dicarbonsäureester von Diolen und höheren Polyolen bzw. Dimonocarbonsäureester und Mono- bzw. Dialkylester von Mono- bzw. Dihydroxymono- bzw. Dicarbonsäuren sowie die Mono- und Dialkylether von Diolen und höheren Polyolen sowie die Monocarbonsäuren und Monoalkanole selbst eingesetzt werden.

Zum Aufbau der Hauptkette der Polyester sind folgende zwei- und mehrfunktionelle, polyesterbildende Ausgangsstoffe bevorzugt:

als tri- und mehrfunktionelle Polycarbonsäuren, Trimellitsäure, Trimesinsäure, Hemellithsäure, Pyromellithsäure und deren polyesterbildende Derivate sowie sehr bevorzugt Trimellitsäureanhydrid und Trimellitsäuremonoalkylester, Trimellitsäure -monoalkylester sowie -dialkylester und -trialkylester.

als Dicarbonsäuren, z.B. Terephthalsäure, Hexahydrophthalsäure, Tetrahydrophthalsäure, Isophthalsäure, Phthalsäure und aliphatische Dicarbonsäuren mit 2 bis 12 Kohlenstoffatomen sowie deren polyesterbildende Derivate, wie z.B. Azelainsäure, Sebazinsäure, Dodekansäure,

als Triole und mehrfunktionelle Polyole Glycerin, Pentaerythrit und sehr bevorzugt Trimethylolpropan, Trimethylolethan, Di-Trimethylolpropanether und deren Ester und Ether, Glycidylester von Monocarbonsäuren, besonders der sogenannten Versaticsäuren.

als Mono- bzw. Dihydroxycarbonsäure z.B. Hydroxybernsteinsäure (Apfelsäure) und als Diole, aliphatische Diole mit 2 bis 6 Kohlenstoffatomen wie Monoethylenglykol oder Hexandiol sowie Etherdiole wie Diethylenglykol, Triethylenglykol bis zu Polyether-glykolen mit Mol-Gew. 1.000.

Zum Aufbau der Alkylseitenketten sind geradkettige oder verzweigte Alkanole oder aliphatische Monocarbonsäuren mit 4 bis 36, vorzugsweise 4 bis 18 Kohlenstoffatomen bzw. die Mono- oder ggf. Diester bzw. Mono- oder ggf. Diether der genannten drei- oder mehrfunktionellen Polyole, Polycarbonsäuren oder Hydroxycarbonsäuren.

Sehr bevorzugt sind verzweigtkettige Alkanole, insbesondere 2-Ethylhexanol oder ggf. tert.-Butanol sowie verzweigtkettige aliphatische Monocarbonsäuren wie 2-Ethylhexansäure, Isononansäure oder $\alpha,\alpha$-Dialkylmonocarbonsäuren in Form der Versaticsäuren, z.B. mit 9 bis 11 Kohlenstoffatomen.

Weiter sind entschieden gesättigte polyesterbildende Ausgangsstoffe bevorzugt, d.h. gesättigte Diole und Dicarbonsäuren, gesättigte Tricarbonsäureester oder ggf. Tricarbonsäure, gesättigte Triole und besonders Glycidylester oder ggf. Glycerin. Es können aber auch kleinere Anteile ungesättigter Ausgangsstoffe verwendet werden bis ca. 2 Mol-%, z.B. Maleinsäureanhydrid oder Fumarsäure.

Die erfindungsgemäße Aufgabe ist besonders vorteilhaft unter Verwendung von Trimellitsäure-mono-2-ethylhexylester oder einer Mischung von Trimellitsäureanhydrid und 2-Ethylhexanol lösbar. Weiterhin bevorzugt sind Trimethylolpropanmonoester, besonders der -mono-2-ethylhexansäureester.

In den erfindungsgemäßen Polyestern soll das Molverhältnis von Estersegmenten der Hauptkette zu Seitenketten 1 zu 0,02 bis 2,0 betragen. Als Estersegment der Hauptkette wird dabei der 2-wertige Rest aus einem Dicarbonsäurerest verbunden mit einem Diolrest verstanden, ohne Rücksicht darauf, ob dieses Estersegment weitere Carboxylgruppen oder Hydroxylgruppen trägt oder nicht trägt. Zwar wäre ein solches Molverhältnis von 1,0 zu 4,0 denkbar, doch sind Polyester, zumal lineare Polyester, aus einem Dialkanolester einer Tetracarbonsäure und dem Dialkanolester eines Tetraols nur schwer zu verwirklichen. Demgegenüber ist ein Polyester mit dem genannten Molverhältnis 1,0 zu 2,0 mit im Mittel einer Alkylseitenkette je Dicarbonsäurerest und einer Alkylseitenkette je Diolrest, beispielsweise aus Trimellitsäure-mono-2-ethylhexylester und Trimethylolpropan-2-ethylhexylester durchaus herstellbar und sinnvoll. Molverhältnisse von Estersegmenten der Hauptkette zur Seitenkette von 1,0 zu 0,05 bis 1,0 sind bevorzugt. Die Polyester gemäß der Erfindung haben bemerkenswerte Eigenschaften.

Insbesondere wird eine Verzweigung der Polyesterketten weitgehend vermieden, so daß nicht nur die teilnehmenden Diole und Dicarbonsäuren, sondern alle Polyole durchschnittlich 2 Hydroxylgruppen zur Polyesterbildung zur Verfügung stellen, alle Polycarbonsäuren ebenfalls 2 Carboxylgruppen polyesterbildend in den Estersegmenten der Hauptkette enthalten haben und in Hydroxycarbonsäuren ebenfalls 2 der funktionellen Gruppen zur Bildung von Estersegmenten der Hauptkette beitragen. Eine geringfügige Kettenverzweigung der Polyesterketten ist jedoch nicht vermeidbar und kann toleriert werden.

In den erfindungsgemäßen Polyestern liegen die Glastemperaturen vorzugsweise unter 0° C, sehr bevorzugt unter minus 20° C.

Gleichzeitig haben die Polyester eine breite Molgewichtsverteilung und Molekulargewichte von etwa 1.000 bis etwa 10.000 oder mehr, wobei 2.000 bis 5.000 bevorzugt ist.Die OH-Zahl liegt zwischen 10 bis 100, vorzugsweise 20-50 mg KOH/g. Die Polyester sind bei 20° C flüssig. Die Glastemperaturen liegen unter minus 10° C, überwiegend sogar wesentlich darunter. Die Viskositäten in (Pa.s) bei 20° C liegen zwischen 70 und ca. 5.000.
Die neuen Seitenketten-Polyester haben die besondere Eigenschaft, daß bei nur geringer Erhöhung der Temperatur ein wesentliches Absinken der Viskosität die Verflüssigung erfolgt. Damit ist die Aufgabe gelöst, Polyester zur Verfügung zu stellen, deren Verarbeitung lösungsmittelfrei erfolgen kann.
Aufgrund ihrer Struktur sind die erfindungsgemäßen Polyester amorph.
Sehr bemerkenswert ist, daß die genannte Aufgabe nicht nur mit aliphatischen Dicarbonsäurekomponenten oder aliphatischen Polycarbonsäurekomponenten, sondern mit aromatischen Dicarbonsäure-und Polycarbonsäurekomponenten, sogar mit ausschließlichem Anteil von aromatischen Polycarbonsäuren gelöst werden kann, obgleich ein Polyester aus beispielsweise Terephthalsäure und Ethylenglykol bei 100° C fest ist und eine Glastemperatur von 73° C aufweist, die auch durch eine Verwendung einer Mischung aromatischer Dicarbonsäuren nicht wesentlich gesenkt werden kann.

Nach dem Stand der Technik mußten Polyester mit tiefen Glasumwandlungstemperaturen einen hohen Anteil aliphatischer Dicarbonsäure oder Diole aufweisen, wodurch ihre Haftung zu polaren Oberflächen bei Verwendung als Klebstoff, besonders zu Metallen, sehr gering ist.

Die erfindungsgemäßen Polyester besitzen auch bei sehr hohen Anteilen aromatischer Bausteine gleichzeitig niedrige Schmelzviskosität und tiefe Glasumwandlungstemperaturen und weisen eine ausgezeichnete Haftung zu Metall auf.

Die Glasumwandlungstemperatur der beschriebenen Polyester liegt bei gleichen Anteilen an aromatischen Dicarbonsäuren wesentlich tiefer als die der bekannten Polyester.

Die Glasumwandlungstemperatur sinkt mit höherem Mol-Gehalt von Alkylseitenketten und mit zunehmender Länge der Alkylseitenketten.
Beispiel hierfür zeigt Tabelle 1. Auf die Eigenschaften ist es jedoch von geringem Einfluß, ob die Alkylseitenkette an die Dicarbonsäurekomponente oder die Diolkomponente der Estersegmente gebunden ist und ob die Bindung durch eine Etherbrücke oder eine Estergruppe erfolgt.

Die wesentlich erniedrigte Schmelzviskosität der erfindungsgemäßen Polyester ist von besonderer Bedeutung für die lösungsmittelarme oder lösungsmittelfreie Verarbeitung, wobei die Erniedrigung der Viskosität durch die Anzahl und die Länge der Seitenketten eingestellt werden kann. Der Zusatz von Weichmachern oder Reaktivverdünnern kann daher entfallen, anders als bei bekannten Polyestern.

Für die Verwendung der erfindungsgemäßen Polyester ist insbesondere ihr Charakter als Hydroxylpolyester maßgebend, wodurch eine Umsetzung mit reaktiven oder vernetzbaren Verbindungen, wie Isocyanaten, Melamin- oder Benzoguanaminharzen, Epoxiden, Silanestern o. dgl. vorgesehen ist, durch welche die erfindungsgemäßen Polyester vernetzbar werden. Weiterhin kann eine Umsetzung der Hydroxypolyester mit Carbonsäureanhydriden und anschließende Vernetzung mit Epoxiden oder Polyoxazolinen und die Peroxid-oder Strahlenhärtung nach Funktionalisierung mit ungesättigten Gruppen erfolgen.

Durch die Eigenschaften der erfindungsgemäßen Polyester werden Beschichtungen oder Klebstoffe elastischer und kältebeständiger. Als Reaktivkleber sind funktionalisierte Produkte aus der erfindungsgemäßen Polyestern, besonders für den Verbund von Materialien gleicher oder unterschiedlicher Qualität, wie etwa Metalle, Kunststoffe, Glas, Keramik, Leder u.a. einsetzbar, wobei für den Auftrag geringere Temperaturen nötig sind. Die ausgehärteten Massen weisen eine sehr gute Elastizität bei gleichzeitig guter Festigkeit. Als Flüssigpolyester eignen sich die beschriebenen Polyester aufgrund ihrer tiefen Glasumwandlungstemperaturen besonders für Kaschier- und Haftklebeanwendungen, wobei speziell an polaren Substraten eine bessere Haftung erreicht wird als mit bekannten Flüssigestern. Der Grad der Klebrigkeit ist weiterhin durch Art und Menge der Alkylseitenketten beeinflußbar.
Zusätze von klebrig machenden Harzen, Pigmenten, Alterungsschutzmitteln, Füllstoffen wie Silica, Kreide u.a. sind möglich.
Zur Herstellung der erfindungsgemäßen Polyester können im wesentlichen zwei Wege beschritten werden. Die Monocarbonsäuren und Monoalkanole können (vor der Polyesterbildung)mit tri- oder mehrfunktionellen Dicarbonsäuren oder deren Anhydriden oder deren esterbildenden Derivaten, insbesondere den Methylestern bzw. den tri- oder mehrfunktionellen Polyolen, zu Monoestern oder ggf. Diestern oder den Monoethern oder ggf. Diethern umgesetzt werden. Diese Verfahrensweise ist insbesondere bei den schwerveresternden Versaticsäuren und ggf. auch bei verzweigten Alkoholen wie 2-Ethylhexanol ratsam. Der Einbau von Versaticsäuren ist durch Verwendung der entsprechenden handelsüblichen Glycidylester möglich, wobei vorzugsweise zunächst mit einer Dicarbonsäure, beispielsweise einer aliphatischen Dicarbonsäure und im zweiten Schritt mit aromatischen Dicarbonsäureanhydriden umgesetzt wird, worauf weitere Polyesterrohstoffe zugegeben werden können.

Zum anderen können Monocarbonsäuren und/oder Monoalkanole bei der Veresterung und Polyesterbildung anwesend sein, wobei auch ein Überschuß der monofunktionellen seitenkettenbildenden Verbindungen möglich und zweckmäßig ist. Die Umesterung und Polyesterbildung kann durch Katalysatoren gefördert werden. Weiterhin kann die statistische Verteilung durch ggf. gesenkte Veresterungstemperaturen und erhöhte Veresterungszeit gefördert werden. Im allgemeinen liegen die Temperaturen bei der Veresterung und Polyesterbildung bei 180 bis 260° C, vorzugsweise 200 bis 240° C.

Am Ende der Polykondensation wird vorzugsweise der Druck auf 10 bis 20 mbar gesenkt.

Verzweigte Alkylgruppen, besonders in vorgebildeten Estern der Tricarbonsäurealkylester und Glycidylversaticsäureester werden bei der Polykondensation erfindungsgemäß praktisch nicht abgespalten. Es ist möglich,aber nicht bevorzugt,Monoalkanole zusammen mit Tricarbonsäuren oder Triole und aliphatische Monocarbonsäuren zusammen mit Triolen bei der Polykondensation einzusetzen und so die Alkylseitenketten während der Polykondensation zu bilden.

Es ist aber entschieden vorzuziehen, entsprechende Monoester oder Monoether oder die Di- und Triester vorzubilden, bei denen alle monofunktionellen Alkylseitengruppen bis auf eine pro Mol abgespalten werden.

Erfindungsgemäß ist es in den neuen Seitenpolyestern bevorzugt, daß von 90 % oder mehr der Estersegmente keine konventionellen Zweigketten aus Polyestersegmenten ausgehen.

Bei der Herstellung der Polyester ist überprüfbar, daß die Alkylreste von an der dritten Funktion von Tricarbonsäuren gebundenen Monoalkoholen und an die dritte Funktion von Triolen gebundenen Monocarbonsäuren nicht abgespalten werden und in den Hydroxylpolyestern erhalten sind, was auf einfache Weise durch Analyse des Destillats von Veresterung und Polykondensation geschehen kann. An erste und zweite Funktionen polyesterbildender Bestandteile gebundene Alkylseitenketten, z.B. Methanol in Dimethylterephthalat und zwei Alkylgruppen in Tricarbonsäuretrialkylestern werden hingegen abgespalten und treten als freie Alkanole oder Monocarbonsäuren im Destillat auf.

Es wird ein Überschuß von Diolen plus Triolen bzw. deren Estern oder Derivaten eingesetzt gegenüber Dicarbonsäuren plus Tricarbonsäuren bzw. deren Estern oder Derivaten und mit Fortschreiten der Polykondensation der Überschuß des Diols entfernt, bis Hydroxylzahlen von 10 bis 100 und Säurezahlen (SZ) unter 5, vorzugsweise unter 3, sehr bevorzugt unter 1, erreicht sind.

Bei der Entfernung der letzten Mengen von überschüssigem Diol und Absenkung der OH-Zahlen auf den Endwert darf nicht Vernetzung durch Abspaltung von Alkylseitenketten eintreten, die sich durch Stehenbleiben des Rührers einem schnellen Anstieg der Viskosität um mindestens eine Zehnerpotenz und Entstehen einer zähelastischen Masse anzeigt. Ein solcher verdorbener Ansatz ist in gleicher Weise zu wiederholen, wobei aber eine um 5 höhere OH-Zahl als die zuletzt gemessene des verdorbenen Ansatzes die endgültige OH-Zahl ist oder ggf. die letzte Temperatur der Polykondensation um 10° C zu senken ist bzw. der Druck auf 40 bis 50 mbar zu erhöhen ist.

Ein weiterer Weg ist der Einsatz von Tricarbonsäuretrialkylestern (vgl. Beispiel 1) anstelle gleicher Molmengen der Monoester oder des Esters nach Beispiel Ib). Trimethylolpropan-monoester (Beispiel Ia) und besonders Glycidylester, insbesondere die aller Versaticsäuren, erwiesen sich als sehr stabil.

Die Herstellung der erfindungsgemäßen Hydroxylpolyester mit Alkylseitenketten durch ein Verfahren zur Herstellung von Polyestern mit OH-Zahlen von 10 bis 100 aus zwei- und mehrfunktionellen Ausgangsstoffen, wobei im Überschuß bei der Polyesterbildung vorhandene Diole im Laufe der Polyesterbildung entfernt werden, dadurch gekennzeichnet, daß als difunktionelle polyesterbildende Bestandteile aliphatische

Diole und aliphatische, cycloaliphatische oder aromatische Dicarbonsäuren, als trifunktionelle Bestandteile, Tri- oder Polycarbonsäuren, Tri- oder Polyole oder Hydroxycarbonsäuren, deren polyesterbildende Derivate und Monoalkanole und/oder aliphatische Monocarbonsäuren als freie Verbindung oder als Ester bzw. Ether der trifunktionellen polyesterbildenden Bestandteile eingesetzt werden, wobei mindestens je dritte oder höhere Carboxyl- oder Hydroxylfunktion der trifunktionellen polyesterbildenden Bestandteile ein oder mehr Mole Monoalkanol oder aliphatische Monocarbonsäure als freie Verbindung oder Ester bzw. Ether vorhanden sind und zu Polyestern umgesetzt werden.

Die Bestimmung des Glaspunktes (Tg) wurde mit einem Differentialkalorimeter, Mod. DSC 1 der Fa. Perkin-Elmer, durchgeführt.

Die Endgruppenkonzentration wird durch die Säurezahl SZ, Hydroxylzahl OHZ, beide in mg KOH/g bzw. die Carboxylzahl (C) in mVal.COOH/kg Polymer nach H. Pohl, Analytic. Chem. 26 (1954), 1614, gemessen.

Die angegebenen Molekulargewichte sind durchschnittliche Molekulargewichte (M) aufgrund von Messungen der

Gelpermeations-chromatographie (GPC) und Abschätzung aufgrund der enthaltenen Peaks, die Schwerpunkte der enthaltenen Molekulargewichte anzeigen, bzw. mittlere Molekulargewichte (M), berechnet aus der OH-Zahl.

Besonders bevorzugt ist die Verwendung der neuen Polyester als Haftklebstoffe, nachdem 30 bis 70 % der Hydroxylgruppen durch Methacrylgruppen oder Acrylgruppen ersetzt worden sind durch Vernetzung mit Elektronenstrahlen oder UV-Strahlen. Im Falle von UV-Strahlen wird ein Photosensibilisator, beispielsweise nach Polymers Paint Colour Journal, Vol. 175 (April 1985), Seiten 247 bis 250, in Mengen von 1 % vor der Vernetzung zugesetzt. Die Polyester können gemäß den mit F bezeichneten Beispielen mit an sich beliebigen Acrylverbindungen und Methacrylverbindungen umgesetzt werden, die eine weitere, mit Hydroxylgruppen reaktionsfähige Gruppe, wie die Isocyanatgruppe, eine Ethergruppe oder eine Glycidylgruppe enthalten, wobei im Falle von Glycidylacrylaten und Methacrylaten zunächst durch Umsetzung mit Dicarbonsäure ein Carboxylpolyester herzustellen ist.
Als Haftklebstoffe werden dabei flächige Beschichtungen auf Papier, Kunststoff o.dgl. verstanden, welche die besondere Eigenschaft der Dauerklebrigkeit aufweisen. Diese bevorzugte Verwendung ist besonders für die beanspruchten Polyester geeignet, da auf diese Weise Haftklebstoffe herstellbar sind, die nicht Lösungs- oder Verdünnungsmittel enthalten, welche bei der Vernetzung stören.

Der besondere Vorteil der strahlungsvernetzbaren Makromere ist erfindungsgemäß die bisher nicht erreichbare niedrige Viskosität. Die Makromeren sind beständig in offenen Gefäßen, sogar bei Temperaturen bis ca. 150° C.

In zweiter Stufe erfolgt die Umsetzung von 30 bis 70 % der Hydroxylgruppen der Polyester durch Acrylatverbindung und somit die Ersetzung von 30 bis 70% der vorhandenen Hydroxylgruppen durch Acrylatgruppen.
Die Art der einzusetzenden Acrylatverbindungen oder Methacrylatverbindungen ist an sich gleichgültig, solange die jeweilige Verbindung eine mit der Hydroxylgruppe der Polyester reaktionsfähige weitere Gruppe aufweist.
Im einfachsten Falle kann die Acrylsäure, Methacrylsäure oder Acrylchlorid, Methacrylchlorid oder die Anhydride der Acrylsäure bzw. Methacrylsäure verwendet werden. Diese Funktionalisierung gemäß $b_5$) ist nicht bevorzugt, weil diese Verbindungen schwer handhabbar sind. Es müssen die üblichen Polymerisationsinhibitoren, wie unter $b_2$) beschrieben, zugegeben werden.
Gemäß $b_1$) kann weiter Isocyanato-alkylacrylat oder Isocyanato-alkylmethacrylat zur Funktionalisierung verwendet werden, wobei Alkyl die Bedeutung Ethyl oder Propyl hat.

Gemäß $b_2$ können Addukte im Verhältnis 1 : 1 verwendet werden, welche eine Isocyanatogruppe und einen Acrylatrest bzw. einen Methacrylatrest aufweisen. Diese Addukte werden vor der Umsetzung mit den Hydroxylpolyestern hergestellt aus einerseits Diisocyanaten oder ggf. Polyisocyanaten oder Isocyanato-praepolymeren von Polyestern oder Polyethern mit niedrigem Molekulargewicht, welche zwei Isocyanatgruppen im Molekül aufweisen und andererseits etwa äquivalente Molmengen Hydroxyalkylacrylate bzw. Hydroxyalkylmethacrylate.

Bevorzugt sind als die Isocyanate Toluylendiisocyanat, Methylendiphenyl-4,4'-diisocyanat, Hexamethylendiisocyanat, Benzol-1,4-diisopropylisocyanat, Isophorondiisocyanat und weitere Diisocyanate. In gleicher Weise können auch Triisocyanate verwendet werden, die auch mit zwei Mol Hydroxylalkylacrylat umgesetzt werden. Isocyanat-praepolymere können in vorgebildeter Form, beispielsweise als Desmodur PF (Bayer AG) verwendet werden, oder aus beispielsweise Triethylenglykol durch Umsetzung mit den genannten Diisocyanaten hergestellt werden. In gleicher Weise kann beispielsweise ein Umsetzungsprodukt der Molekulargröße 3 oder 5 von 2 Molen Ethylenglykol und 1 Mol einer Dicarbonsäure mit einem der Diisocyanate umgesetzt werden und nachträglich mit Hydroxylalkylacrylaten zur Umsetzung kommen, so daß das genannte Addukt gebildet wird.
Zur Bildung der Addukte sind Temperaturen von 50 bis 120°C ausreichend. Es ist ohne Zutritt von Luftfeuchtigkeit zu arbeiten und eine Umsetzung der Isocyanate und Polyisocyanate bis auf einen Rest von ca. 10 % durch Analyse festzustellen.
Weiter kann gemäß $b_3$ Methyl-acrylamidoglykolat-methylether (MAGME) der Fa. Dyno Cyanamid C.V., Rotterdam oder der entsprechende Acrylamidoglykolat-methylether verwendet werden. Hier erfolgt eine Umetherung, wobei unter den unten genannten Reaktionsbedingungen das freiwerdende Methanol entfernt wird.
Weiter kann gemäß $b_4$ zunächst eine Umsetzung von 30 bis 70 % der Hydroxylgruppen des Polyesters mit einer Dicarbonsäure oder bevorzugt mit einem Anhydrid einer Dicarbonsäure, beispielsweise mit Phthalsäureanhydrid oder jedem anderen aliphatischen oder aromatischen Dicarbonsäureanhydrid erfolgen. Diese Umsetzung erfolgt zweckmäßig direkt nach Bildung des Polyesters. Durch die Menge des Dicarbonsäureanhydrids bleiben die gewünschte Menge der Hydroxylgruppen erhalten. Anschließend werden die durch Umsetzung der Dicarbonsäure oder des Dicarbonsäureanhydrids entstandenen Carboxylgruppen mit Glycidylacrylat oder Glycidylmethacrylat, bevorzugt unter Zugabe eines Polymerisationsinhibitors, umgesetzt.
Sofern nicht anders gesagt, erfolgt die Umsetzung der Hydroxylgruppen des Polyesters mit 1,0 bis 1,1 Mol der Stoffe $b_1$ bis $b_5$ je Mol der umzusetzenden OH-Gruppen bei 60 bis 150° C und Drucken von 300 mbar bis Normaldruck unter Ausschluß von Luftfeuchtigkeit.

In gleicher Weise kann die Umsetzung mit den Acrylatverbindungen oder Methacrylatverbindungen auch aus bereits hergestellten Polyestern bei den genannten Temperaturen erfolgen. Es können beliebige andere Acrylatverbindungen und Methacrylatverbindungen verwendet werden, welche in der Lage sind, mit den Hydroxylgruppen oder mit

Carboxylgruppen eines Carboxylpolyesters (der aus dem Hydroxylpolyester durch Umsetzung mit Dicarbonsäureanhydriden entsteht) reaktionsfähig sind.
Auf diese Weise entstehen die acrylatfunktionellen oder methacrylatfunktionellen Makromere, welche durch Strahlenvernetzung Haftklebstoffe liefern, wobei in der verwendeten dünnen Schicht 2 bis 5 Mrad durch die überraschend hohe Reaktivität der funktionalisierten Makromere ausreichend sind.
Durch die niedrige Viskosität der funktionalisierten Makromere ist es möglich, bei 50 bis höchstens 100° C auf Papier oder Kunststofffolien, beispielsweise mit einem Rakel oder durch Streichen, 5 bis 200 g Makromere in einem Arbeitsgang aufzutragen und durch Strahlung mittels eines Elektronenstrahlers (EB) oder durch UV-Strahlen die Vernetzung zum Haftklebstoff durchzuführen. Bei UV-Strahlenvernetzung ist ein Photoinitiator bzw. Photosensibilisator in Mengen von 0,5 bis 1,5 % den Makromeren zuzusetzen, was direkt nach Herstellung erfolgen kann. Geeignete Photoinitiatoren sind in Polymers Paint Colour Journal, Vol. 175 (April 1985), Seiten 247 bis 250, beschrieben.
In den Beispielen sind die Beispiele der Funktionalisierung mit F und die Beispiele der Vernetzung mit V gekennzeichnet.

Beispiel 1

In einem Reaktor mit aufgesetzter Kolonne, Kontroll- sowie Kontaktthermometer wird unter Rühren und Stickstoffatmosphäre aus 464 g (2,417 Mol) Trimellitsäureanhydrid und 990 g (7.615 Mol) 2-Ethylhexanol der Triester mit 0,75 g Octylenglykoltitanat als Katalysator durch Veresterung bei 160 bis 210° C in 5 Stunden unter Einhaltung einer Kolonnenkopftemperatur von ca. 102° C hergestellt. Wenn eine Säurezahl von < 3 mg KOH/g erreicht ist, werden 333 g (3.142 Mol) Diethylenglykol zugegeben und die Kolonne geschlossen. Nach Umstellen auf eine Destillationsbrücke wird umgeestert und bei 200 bis 230° C 2-Ethylhexanol so abdestilliert, daß die Brüdentemperatur 165° C nicht überschreitet. Wenn die Brüdentemperatur bei einer Innentemperatur von 230° C auf < 100° C fällt, wird Vakuum angelegt (800 mbar fallend auf 300 mbar), so daß die Brüdentemperatur im Bereich 100 bis 165° C liegt. So wird umgeestert, bis die Endkennzahlen erreicht sind. Dann wird das Vakuum mit Stickstoff aufgehoben und das Produkt gekühlt.

| | | | |
|---|---|---|---|
| Kenndaten: | SZ | < 0,2 mg KOH/g | $\overline{M}$ = 4.000-5.000 |
| | OHZ | 40,0 mg KOH/g | |
| | $V_{20}$ | 88 Pa.s | |
| | $T_g$ | - 38°C | |

Es wurden dabei im Destillat des Ansatzes 676 g 2-Ethylhexanol und 84 g Diethylenglykol gefunden.
Im hergestellten Produkt errechnet sich daraus, daß 1 Mol 2-Ethylenhexanol je Mol Trimellitsäure gebunden und als Alkylseitenkette enthalten ist, was sich durch Analysen bestätigt. Das Verhältnis von Estersegmenten zu Alkylseitenketten ist 1 : 1 Mol.

Bei Folgeansätzen dieses Alkylseitenketten-Polyesters kann das Destillat als Quelle für 2-Ethylhexanol eingesetzt werden, wobei bei der Polyesterbildung die Menge Diethylenglykol entsprechend der schon zugesetzten Menge vermindert wird.

Beispiel 2

13,57 kg Glycidylester der Versaticsäure 10(Cardura(R)E10 der Shell) 2 wurden in einem Reaktor mit aufgesetzter Kolonne, Kontroll- sowie Kontaktthermometer unter Rühren und Stickstoffatmosphäre auf 110° C erwärmt. Zum Glycidyl ester wurden dann 4,35 kg Adipinsäure und 67 g DYNAPOL A 1 V(R) (1) zugegeben. Die Glycidyladipatbildung fand unter schwacher Wärmetönung statt, die eine Temperatursteigerung auf 140° C zur Folge hatte. Die Temperatur von 140° C wurde 30 min. gehalten. Danach erfolgte die Zugabe von 8,81 kg Phthalsäureanhydrid und 5,52 kg Diethylenglykol. Der Reaktorinhalt wurde in 1 Std. 30 min. auf 235° C geheizt. Nach 5 Std. bei 235° C wurden 22 g Octylenglykoltitanat zugegeben und ein Vakuum von 150 mbar angelegt. Der Druck wurde innherlab von 2 Std. 30 min. bis auf 10 mbar, danach weiter auf 5 mbar gesenkt. Nach 4 Std. unter diesen Bedingungen wurde die Kondensation durch Brechen des Vakuums und Kühlen des Produktes beendet. Das Produkt hatte eine SZ < 1 mg KOH/g und eine OHZ von 40 mg KOH/g sowie eine Viskosität $V_{20}$ = 4.350 Pa.s.

Die Glasumwandlungstemperatur liegt bei -15° C.
$\overline{M}$= 2.800 bis 3.800
Im Destillat wurde nur der Überschuß des Diethylenglykols gefunden, aber praktisch keine Versaticsäure. Dementsprechend ist der Rest der Versaticsäure als Alkylseitenkette an den Glycerinrest des Polyesters gebunden, was durch Analysen bestätigt wurde. Das Verhältnis von Estersegmenten zu Alkylseitenketten beträgt 1 : 0,53 Mol.

2) Versaticsäure der Gesamtkohlenstoffanzahl 10 mit $\alpha,\alpha'$-Kettenverzweigung durch überwiegend Methylgruppen

mit einem kleineren Anteil Ethylgruppen.

1) Addukt aus phosphoriger Säure und 3 Mol Versaticsäure 10 (Cardura (R) 10 der Shell) nach EP-$A_1$ 0 117 912, als Schutz vor oxidativen Abbau.

Beispiel 3

In einem Reaktor mit aufgesetzter Kolonne, Kontroll- sowie Kontaktthermometer werden unter Rühren und Stickstoffatmosphäre bei gleichzeitigem Aufheizen chargiert: 13,42 kg Trimethylolpropan/2-Ethylhexansäure-monoester (Beispiel Ia), 1,88 kg Monoethylenglykol, 5,00 kg Hexandiol-1,6, 7,37 kg Adipinsäure, 8,38 kg Isophthalsäure und 45 g DYNAPOL A 1 V.(R)2).
Bei ca. 140° C beginnt die Wasserabspaltung, die unter Kontrolle der Kolonnenkopftemperatur (ca. 105° C) durchgeführt wird.
Nach 2 bis 3 Stunden ist die Endtemperatur von 240° C erreicht. Nach 5 bis 6 Stunden sind 3,70 kg Destillat angefallen.

Es werden 15 g Octylenglykoltitanat zugegeben und Vakuum angelegt. Nach ca. 3 Std. bei Druckverminderung auf bis zu 10 mbar sind die Endkennzahlen erreicht.
Das Vakuum wird mit Stickstoff aufgehoben und das Produkt gekühlt.

| | | | |
|---|---|---|---|
| Kenndaten: | SZ | 1 mg KOH/g | $\overline{M}$ = 3.200 - 4.800 |
| | OHZ | 33 mg KOH/g | |
| | $V_{20}$ | 948 Pa.s | |
| | $T_g$ | -34°C | |

Im Destillat findet sich der Überschuß des Ethylenglykols jedoch praktisch nicht Hexandiol und 2-Ethylhexansäure. Dementsprechend findet sich der Rest des 2-Ethylhexanols als Alkylseitenkette an den Trimethylolpropanrest im Polyester gebunden, was durch Analysen bestätigt wird.
Das Verhältnis der Estersegmente zu Alkylseitenketten beträgt 1 : 0,40 Mol.

2) wie in Beispiel 2

Beispiele 4 bis 11 sowie Vergleichsbeispiele A bis C

Beispiel 11 wird wie folgt durchgeführt:
50,6 g Monoethylenglykol (0,817 mol) und 0,122 g Butyltitanatlösung 36,8 %ig in 2-Ethylhexandiol-1,3 wurden mit 97,0 g Monoester der 2-Ethylhexansäure des Trimethylolpropans 0,35 Mol in einem Rundkolben mit aufgesetzter Kolonne, Thermometer und Rührer unter Stickstoffatmosphäre erwärmt. Bei ca. 80° C erfolgte die Zugabe von 136 g Dicarbonsäuregemisch ($C_4$-$C_6$) (1 Mol). In 30 Minuten wurde die Temperatur auf 150° C, bei beginnender Reaktionswasserabspaltung, gesteigert. Nach 4 Stunden wurden 240° C erreicht bei einer SZ von 14,5 mg KOH/g. Nach weiteren 60 Minuten betrug die SZ 14,0 mg KOH/g. Es wurde ein Vakuum von 100 mbar angelegt und auf 20 mbar gesenkt. Nach 3 Stunden wurde durch Brechen des Vakuums und Kühlen des Produktes die Kondensation beendet.
Das Produkt hatte eine SZ von 1,4 mg KOH/g und eine OHZ von 40 mg KOH/g und eine Glastemperatur von unter -20° C.

Die Beispiele 4 bis 10 und die Vergleichsbeispiele A bis C werden aus den in der Tabelle 1 enthaltenen Bestandteilen in den genannten Molverhältnissen und gleichen Bedingungen wie in Beispiel 11 hergestellt, wobei der gleiche Überschuß von Ethylenglykol verwendet wird. Die Polykondensation wird bei einer Säurezahl unter 2 bei Erreichen der OH-Zahl von 40 abgebrochen. Die Molgewichte (M) liegen zwischen 2.600 und 3.500.

Beispiel Ia

Darstellung des Monoesters aus 2-Ethylhexansäure und Trimethylolpropan

165,6 g 2-Ethylhexansäure (1,15 Mol) wurden in einem Rundkolben mit aufgesetzter Kolonne, Thermometer und Rührer unter Stickstoffatmosphäre erwärmt und 134,0 g Trimethylolpropan (1,0 Mol) sowie 0,86 g Ester der phosphorigen Säure ($H_3PO_3$) hergestellt aus Versaticsäureglycidylester und $H_3PO_3$ und 0,137 g Butyltitanatlösung 36,8 %ig zugegeben. Nach 60 Minuten wurden 185° C erreicht, bei beginnender Abspaltung des Reaktionswassers.

Nun wurde die Reaktionstemperatur auf 255° C gesteigert. Nachdem 93,6 % Reaktionswasser abdestilliert war, wurde die aufgesetzte Kolonne entfernt und auf den unteren Weg umgestellt. Bei Erreichen einer SZ von ca. 6,2 mg KOH/g wurde durch Kühlen des Produktes die Kondensation beendet. Im Produkt sind 1,0 Mol 2-Ethylhexansäure je

Mol Trimethylolpropan enthalten.

Beispiel Ib

Trimellitsäure-2-ethylhexylester

In einen 1 l-Rundkolben werden 193 g (1 Mol) Trimellitsäureanhydrid und 234 g (1,8 Mol) 2-Ethylhexanol sowie 0,2 g Octylenglykoltitanat vorgelegt. Unter $N_2$-Einleitung und Rühren wird auf 150° C erhitzt, wobei die Wasserabspaltung beginnt. Innerhalb 4 Stunden wird die Temperatur auf 220° C gesteigert, das Destillat wird mittels einer Vigreux-Kolonne getrennt, die Kopftemperatur beträgt hierbei 100 bis 105° C. Die Badtemperatur wird so lange gehalten, bis die Kopftemperatur unter 80° C fällt. Das Produkt besitzt eine Säurezahl von 150 ± 10 mg KOH/g. Im Produkt sind 1,7 Mol 2-Ethylhexanol je Mol Trimellitsäure enthalten.

# T A B E L L E 1

Molverhältnisse und Eigenschaften der hergestellten Polyester

| Beispiel | IS | TPS | PS | DCS | AS | TTE | MEG | DEG | HD | GV | TMME | Glas-temp. (°C) | Visk. Pa.s 20°C |
|---|---|---|---|---|---|---|---|---|---|---|---|---|---|
| 1 | -- | -- | -- | -- | -- | $100^{x}$ | -- | 100 | -- | -- | -- | -38 | 80 |
| 2 | -- | -- | 67 | -- | 33 | -- | -- | 47 | -- | $53^{xx}$ | -- | -15 | 4.350 |
| 3 | 50 | -- | -- | -- | 50 | -- | 25 | -- | 35 | -- | $40^{x}$ | -34 | 950 |
| 4 | -- | 25 | 25 | -- | -- | $50^{xxx}$ | 100 | -- | -- | -- | -- | -10 | 3.100 |
| 5 | -- | -- | -- | -- | -- | $100^{xxx}$ | 100 | -- | -- | -- | -- | -53 | 1.200 |
| 6 | -- | 20 | 20 | 60 | -- | -- | 70 | -- | -- | -- | $30^{x}$ | -22 | 1.800 |
| 7 | -- | 20 | 20 | 60 | -- | -- | 70 | -- | -- | -- | $30^{x3}$ | -30 | 1.900 |
| 8 | -- | 10 | 10 | 60 | -- | $20^{xxx}$ | 100 | -- | -- | -- | -- | -23 | 2.000 |
| 9 | -- | 10 | 10 | 60 | -- | $20^{x2}$ | 100 | -- | -- | -- | -- | -26 | 1.700 |
| 10 | -- | -- | -- | 60 | -- | $40^{xxx}$ | 100 | -- | -- | -- | -- | -31 | 300 |
| 11 | -- | -- | -- | 100 | -- | -- | 70 | -- | -- | -- | $30^{x}$ | -41 | 130 |
| A | -- | 50 | 50 | -- | -- | -- | 100 | -- | -- | -- | -- | +55 | fest |
| B | -- | 20 | 20 | 60 | -- | -- | 100 | -- | -- | -- | -- | -12 | 2.300 |
| C | -- | -- | -- | 100 | -- | -- | 100 | -- | -- | -- | -- | -35 | 140 |

Zu Tabelle 1:

PS = Phthalsäure
TPS = Terephthalsäure
AS = Adipinsäure
IS = Isophthalsäure
DCS = aliphatische Dicarbonsäure von $C_4$ bis $C_6$ - Gesamtkohlenstoff (Gemisch gleicher Teile)
MEG = (Mono-)Ethylenglykol
DEG = Diethylenglykol
HD = Hexandiol-1,6
TTE = Trimellitsäure-alkylester
GV = Glycidylester der Versaticsäure 10
TMME = Trimethylolpropan-monoester

x = Tri-2-Ethylhexylester
xx = Versaticsäure-10-ester
xxx = Mono-2-Ethylhexylester
x2 = Monolaurylester
x3 = Kokosfettsäureester

Beispiel 12 bis 15

Beispiel 2 wird wiederholt, wobei jedoch die Menge des Glycidylesters variiert wird, nämlich auf 2 (Beispiel 12), 20 (Beispiel 13), 40 (Beispiel 14) und 70 (Beispiel 15), wodurch 98 Mol-% Diethylenglykol in Beispiel 12 und in den folgenden 80, 60 und 30 Mol-% Diethylenglykol im Produkt enthalten sind und ein dem Beispiel 2 entsprechender Überschuß Diethylenglykol im Ansatz verwendet wird.

Mit steigendem Gehalt von Glycidylestern sinkt die Glastemperatur Tg und die Viskosität.

Beispiele 16 bis 18

Beispiel 3 wird wiederholt, wobei jedoch im Produkt 5 Mol-% (Beispiel 16), 20 Mol-% (Beispiel 17) und 50 Mol-% Trimethylolpropan-mono-2-ethylhexylester (Beispiel 18) und entsprechend 60 Mol-% (Beispiel 16), 45 Mol-% (Beispiel 16) und 15 Mol-% (Beispiel 17) MEG bei gleichen Anteilen von 35 Mol-% Hexandiol-1,6 und jeweils 50 Mol-% Isophthalsäure und 50 Mol-% Adipinsäure enthalten ist. Im Ansatz wird ein Überschuß MEG zugesetzt und mit Fortschreiten der Polykondensation entfernt. Die Produkte haben eine OHZ von 40.

Beispiel 19

| | |
|---|---|
| Polyester mit Alkylseitenketten aus Adipinsäure | 60 Mol-% |
| Phthalsäureanhydrid | 40 Mol-% |
| Cardura E 10[R] | 33 Mol-% |
| Hexandiol-1,6 | 55 Mol-% |
| Neopentylglykol | 12 Mol-% |

Entsprechend der Verfahrensweise von Beispiel 2 wurde ein Alkylseitenkettenpolyester hergestellt aus folgenden

Ausgangsstoffen:
Glycidylester von Versaticsäure E10 (Cardura (R)E10 = 8,89 kg; Hexandiol-1,6 = 7,66 kg; Neopentylglykol = 1,48 kg und den Säurekomponenten Adipinsäure = 8,94 kg; Phthalsäureanhydrid = 6,04 kg sowie Dynapol A1V(R)(vgl. Beispiel 2) = 67 g; Octylenglykoltitanat = 22,5 g.

Kennzahl SZ < 1, OHZ = 30, $V_{20}$ = 795 Pa.s, TG = -31° C

Beispiel 20

| | |
|---|---|
| Polyester mit Alkylseitenketten der Zusammensetzung Adipinsäure | 40 Mol-% |
| Phthalsäureanhydrid | 40 Mol-% |
| Isophthalsäure | 20 Mol-% |
| Cardura R E10 | 33 Mol-% |
| Hexandiol-1,6 | 40 Mol-% |
| Neopentylglykol | 7 Mol-% |

Entsprechend der Verfahrensweise von Beispiel 2 wurde der Polyester aus folgendem Ausgangsstoff hergestellt: Gylcidylester von Versaticsäure 10 (CarduraR E10) 8,78kg; Hexandiol-1,6 = 6,89 kg; Neopentylglykol = 2,07 kg; Adipinsäure = 5,89 kg; Phthalsäureanhydrid = 5,97 kg; Isophthalsäure = 3,35 kg sowie Dynapol A1V(R) = 67 g und Octylenglykoltitanat = 22,5 g.

Der erhaltene Polyester hatte die Kennzahlen:
Säurezahl unter 1, OHZ = 38, $V_{20}$ = 2.610 Pa.s, TG = -22°C

Beispiel 21

| | |
|---|---|
| Polyester mit Alkylseitenketten der Zusammensetzung Adipinsäure | 100 Mol-% |
| Hexandiol-1,6 | 35 Mol-% |
| Monoethylenglykol | 25 Mol-% |
| Trimethylolpropan-monoester der Ethylhexylsäure | 40 Mol-% |

Entsprechend der Verfahrensweise von Beispiel 2 wurde ein Polyester hergestellt aus den Ausgangsstoffen: Adipinsäure = 15,19 kg; Hexandiol-1,6 = 4,97 kg; Monoethylenglykol = 1,87 kg; Trimethylolpropan-mono-ethylhexylester (vgl. Beispiel Ia) = 15,40 kg sowie Dynapol A1V(R) = 30 g und Octylenglykoltitanat = 15 g.
Kennzahlen:SZ unter 1, OHZ = 24, $V_{20}$= 70.8 Pa.s,TG =-50°C

Beispiele für Funktionalisierung mit Acrylaten

Beispiel II a

| | |
|---|---|
| Herstellung des IPDI/HEA - 1:1 - Adduktes Rohstoffe für 100 kg: | |
| Isophorondiisocyanat (IPDI) | 65,68 kg |
| 2-Hydroxyethylacrylat(HEA) | 34,32 kg |
| Dibutylzinndilaurat (DBTL) | 50 g |
| Polymerisationsinhibitor (2,6-Di-tert.-butyl-4-methylphenol) | 50 g |

In einem Reaktor werden IPDI, DBTL und der Polymerisationsinhibitor vorgelegt und auf 40° C erwärmt. HEA wird unter Rühren während 3 Std. gleichmäßig zudosiert. Sobald durch exotherme Reaktion die Temperatur auf 60° C ansteigt, wird gekühlt, so daß die Temperatur 80° C nicht übersteigt, jedoch 50° C nicht unterschritten werden. Nach beendeter HEA-Zugabe wird so lange der Reaktorinhalt auf 60° C gehalten, bis der NCO-Gehalt auf 12,2 % nach 2 Std. gesunken ist. Viskosität von 8.000 bis 12.000mPa.s bei 20° C. Das Produkt kann für kurze Zeit an der offenen Luft gehandhabt werden, muß jedoch bei längerer Aufbewahrung gegen Luftfeuchtigkeit in geschlossenen Fässern geschützt werden.

Funktionalisierung von Polyestern durch Acrylierung

Beispiel F1

Der Polyester nach Beispiel 2 wird direkt nach der Herstellung auf 120° C abgekühlt und das Vakuum auf 400 mbar eingestellt bzw. ein fertiger Polyester nach Beispiel 2 wird auf 120° C bei einem Vakuum von 400 mbar erwärmt. Unter Rühren werden je 100 kg des Polyesters nach Beispiel 2 12,5 kg des Addukts nach Beispiel IIa zugegeben und 1 Std. gerührt bis der NCO-Gehalt auf unter 0,2 % abgesunken ist.

Durch diese Reaktion wurden die Hydroxylgruppen des Polyesters nach Beispiel 2 von ursprünglich einer OH-Zahl von 40 zu 50 % umgesetzt, so daß nunmehr anstelle der Hälfte aller Hydroxylgruppen Acrylatreste stehen. Ein solches Produkt wird A 50 genannt.
Viskosität bei 50° C 114 Pa.s TG -5° C

Beispiele F2 und F3

In entsprechender Weise wie Beispiel F1 wird der Polyester nach Beispiel 2 mit 7,5 kg (Beispiel F2) und mit 17,5 kg (Beispiel F3) des Adduktes nach Beispiel IIa entsprechend Beispiel F1 umgesetzt.
In Beispiel F2 beträgt die Funktionalisierung 30 % der vorhandenen Hydroxylgruppe des Polyesters (Produkt A 30). Die Viskosität bei 50° C beträgt 192 Pa.s, TG -10° C.

Das Produkt von Beispiel F3 ist zu 70 % funktionalisiert (Produkt A 70). Die Viskosität bei 40° C beträgt 310 Pa. s TG -4° C.

Beispiel F4

Nach der Verfahrensweise des Beispiels F1 wird der Polyester nach Beispiel 1 mit 12,5 kg des Produktes nach Beispiel IIa je 100 kg des Polyesters zur Reaktion gebracht. Es entsteht ein Produkt mit einer 50 %igen Funktionalisierung der Hydroxylgruppen. Viskosität bei 50° C Beträgt 35 Pa.s, TG -32°C.

Beispiel F5

Der Polyester nach Beispiel 3 wird entsprechend der Verfahrensweise des Beispiels F1 mit 12,5 kg des Adduktes nach Beispiel IIa zur Reaktion gebracht. Es entsteht ein funktionalisierter Polyester mit Viskosität bei 50° C von 88 Pa. s, TG -25° C.

Beispiel F6

Der Polyester nach Beispiel 2 wird auf 150° C unter Rühren erwärmt und mit 11,8 kg Stahlsäureanhydrid je 100 kg des Polyesters versetzt. Nach 30 min. ist die Hydroxylzahl auf 17 mg KOH/g gesunken, während die Säurezahl 18 mg KOH/g erreicht. Darauf werden 9,1 kg Glycidylmethacrylat sowie 50 g Hydrochinon als Polymerisationsinhibitor zugesetzt und weitere 30 min. bei 150 bis 170° C unter Rühren umgesetzt. Das Produkt wird abgekühlt und abgefüllt. Die Säurezahl beträgt 2 mg KOH/g, die Viskosität bei 20° C beträgt 4.500 Pa.s, TG -10° C.

Beispiel F7

Der Polyester nach Beispiel 2 wird auf 150° C unter Rühren erwärmt. Pro 100 kg des Polyesters werden 4,6 kg Methylacrylamidoglykolat-methylether (MAGME) sowie 50 g p-Toluolsulfonsäure und 50 g Hydrochinon zugegeben und anschließend weitere 50 min. bei 150° C reagieren gelassen.
Es entsteht ein Polyester, dessen Hydroxylgruppen zu 50% acryliert sind.

Viskosität bei 20° C 4.300 Pa.s, TG -15° C.

Beispiel F8

Harzzusatz

Der funktionalisierte Polyester nach Beispiel F2 wird in Mengen von 800 Teilen mit 200 Teilen Polyvinylmethylether (Lutonal M 40 der Fa. BASF) bei 70° C in einem Kneter homogenisiert.
Soweit die Vernetzung mit UV-Strahlen ausgeführt wird, werden danach 1 % Darokur 1173 der Fa. Merk als Photoinitiator zugefügt.

Vernetzung zu Haftklebstoffen aus funktionalisierten Polyestern

V 1 - Elektronenstrahlvernetzung

Mittels einer Rakel wird auf ein Papier von 80 g/$m^2$ oder eine entsprechende Kunststofffolie einer der in den Beispielen F genannten funktionalisierten Polyestern bei 100° C mit einem Auftragsgewicht von 20 g/$cm^2$ aufgetragen und bei einer Strahlendosis von 3 Mrad mittels eines Elektronenstrahlers (Elektrocurtain Fa. Energy Sciences Int.) vernetzt.

V 2 - UV-Strahlenvernetzung

Die unter V1 genannte Auftragsweise und die dort genannten Polyester werden in gleicher Weise und bei gleichen Temperaturen verwendet, wobei stets als Photoinitiator 1 % Darocur 1173 (Fa. Merk) im funktionalisierten Polyester verteilt ist.
Die Vernetzung erfolgt durch eine Bestrahlungszeit von 0,5 sec. mittels eines UV-Strahlers, Hersteller: Fa. Theimer, mit Strahlungsleistung von 100 W/cm.

Es können auch Auftragstemperaturen von 50° C aufwärts gewählt werden, soweit die funktionalisierten Polyester eine voranstehend genannte niedrige Viskosität aufweisen.

Die Eigenschaften der so erhaltenen Haftklebstoffe sind in der nachfolgenden Tabelle genannt.

## TABELLE 2

| Polyester n. Beispielen | Acryl.-Grad | Vernetzung | Schälkraft (N/2,5cm) | Scherstandfestigkeit | Quick-Stick (N/2,5 cm) | Kugelroll-Tack (cm) |
|---|---|---|---|---|---|---|
| 1 + F4 | 50 | UV | 4 | 10 min. | 2 | -- |
| 3 + F5 | 50 | UV | 20 | 2,5 h | 5 | 4 |
| 3 + F5 | 50 | EB | 10 | 2,0 h | 5 | 20 |
| 2 + F2 | 30 | EB | 18 | 9,0 h | 18 | 20 |
| 2 + F1 | 50 | UV | 19 | 45 min. | -- | 20 |
| 2 + F3 | 70 | UV | 4 | 2,0 h | -- | 20 |
| 2 + F8 | 30 | EB | 23 | 24,0 h | 20 | 20 |
| 2 + F7 | 50 | UV | 20 | 8,0 h | -- | 20 |
| 2 + F6 | 50 | UV | 12 | 2,0 h | -- | 20 |

Beispiele F 9 und F 13

In einen 1 l-Rundkolben wird jeweils 1 Mal der nachfolgend aufgeführten Diisocyanate bei Raumtemperatur vorgelegt. Unter Rühren und Einleitung von Stickstoff werden im Verlauf einer Stunde 116 g Hydroxyethylacrylat zugetropft. Nach weiteren 30 Minuten hat sich ursprünglich vorhandener NCO-Gehalt der Mischung auf den halben Wert gesenkt.

| Beispiel | Diisocyanat | NCO-Gehalt des Adduktes | Zusatz zu 800 g Polyester |
|---|---|---|---|
| F 9 | Toluylendiisocyanat | 14,5 % | 37,2 g |
| F 10 | Methylendiphenyl-4,4'-diisocyanat | 11,5 % | 47,0 g |
| F 11 | Hexamethylendiisocyanat | 14,8 % | 36,4 g |
| F 12 | Benzol-1,4-diisopropylisocyanat | 11,7 % | 46,2 g |
| F 13 | Isophorondiisocyanat | 12,4 % | 43,4 g |

Analog Beispiele F8 werden nun 800 g des in Beispiel 22 beschriebenen Polyesters mit den in der Tabelle jeweils angeführten Mengen an Diisocyanat-Hydroxyethylacrylat-Addukt umgesetzt, so daß der resultierende NCO-Gehalt des Produktes kleiner als 0,1 % ist.

Beispiel 22

Herstellung des Polyesters zu Beispielen F 9 und F16

In einem 2-l-Rundkolben werden 700 g des Trimellitsäure-2-ethylhexylesters gemäß Beispiel 14 mit 202 g Ethylenglykol unter Rühren und Stickstoffeinleitung aufgeheizt. Die Wasserabspaltung beginnt bei ca. 180° C. das Reaktionswasser wird über eine Vigreux-Kolonne und Destillationsbrücke bei einer Kopftemperatur von 100 bis 105° C abdestilliert.

Innerhalb von drei Stunden wird die Temperatur von 180° C auf 210° C gesteigert. Als Veresterungskatalysator werden nun 0,6 g Oktylenglykoltitanat zugesetzt und eine weitere Stunde bei 210° C gerührt. Es werden nun weitere 0,3 g Oktylglykoltitanat zugesetzt und nach Entfernen der Destillationseinrichtung ein Vakuum angelegt, das innerhalb von 30 Minuten auf 10 mbar abgesenkt wird. Es wird weiter kondensiert, bis die gewünschten Kenndaten von Hydroxylzahl = 40 mg KOH/g bei Säurezahl von kleiner 1 mg KOH/g erreicht werden.

Beispiel F17

800 g des in Beispiel F9 beschriebenen Polyesters werden mit 8,2 g Trimellitsäureanhydrid bei 150°C und anschließend bei 80°C analog Beispiel F9 mit 20 g Isocyanatoethylmethacrylat umgesetzt, so daß der resultierende NCO-Gehalt kleiner 0,1 % beträgt.

Beispiele F 18 und F19

In einen 1 l-Rundkolben werden bei einer Temperatur von 80° C 800 g des in Beispiel F9 beschriebenen Polyesters mit 39 bzw. 65 g eines 1:1-Adduktes aus Toluylendiisocyanat und 2-Ethylhexanol (NCO=13,8 %) umgesetzt. Dadurch wird ein Teil der Hydroxylgruppen durch Urethangruppen ersetzt. Anschließend werden diese Produkte analog Beispiel F9 mit 26,7 bzw. 20,0 g Isocyanato-ethylmethacrylat funktionalisiert, so daß der resultierende NCO-Gehalt kleiner als 0,1 % liegt.

**Patentansprüche**

**1.** Strahlenvernetzbare Makromere auf der Basis von Acrylgruppen oder Methacrylgruppen tragenden Polyestern, dadurch gekennzeichnet, daß

Hydroxylgruppen enthaltende Basispolyester mit mittleren Molekulargewichten von 1.000 bis 10.000 und bei 20 °C flüssigem Zustand, welche Alkylseitenketten mit 4 bis 36 C-Atomen in der Alkylgruppe über Estergruppen oder Etherbrücken von dritten oder höheren polyesterbildenden Funktionen an die Hauptkette gebunden enthalten, oder an der dritten oder höheren Funktion verzweigte Hydroxygruppen enthaltende Polyester zu 30 bis 70 % der Hydroxylgruppen der Polyester mit Acrylatverbindungen oder Methacrylatverbindungen umgesetzt sind, wobei

Isocyanatoalkyl(meth-)acrylat und/oder Addukte aus Di- oder Triisocyanaten oder Polyisocyanaten oder Isocyanatopraepolymeren von Polyestern oder Polyethern mit niedrigem Molekulargewicht mit Hydroxylalkylacrylaten bzw. Hydroxyalkylmethacrylaten und/oder

Methyl-acrylamidoglykolat-methylether und/oder nach Umsetzung von 30 bis 70 % der Hydroxylgruppen der Polyester mit einer Dicarbonsäure. Tricarbonsäure oder deren Anhydriden zu Carboxypolyestern Glycidylacrylat oder Glycidylmethacrylat und/oder

Methacrylsäure oder Acrylsäure oder deren Derivate verwendet sind.

**2.** Makromere nach Anspruch 1, worin der nicht mit (Meth)acrylatverbindungen umgesetzte Anteil der Hydroxylgruppen der Polyester ganz oder teilweise durch andere reaktiv vernetzbare oder nichtreaktive Gruppen ersetzt ist.

**3.** Makromere nach Anspruch 1, worin der nicht mit (Meth)acrylatverbindungen umgesetzte Anteil der Hydroxylgruppen der Polyester als Hydroxylgruppen erhalten ist.

**4.** Makromere nach mindestens einem der Ansprüche 1 bis 3,
dadurch gekennzeichnet,
daß zusätzlich klebrig-machende Harze, Pigmente, Alterungsschutzmittel oder Füllstoffe enthalten sind.

**5.** Makromere nach mindestens einem der Ansprüche 1 bis 4,
dadurch gekennzeichnet,
daß die Basispolyester Glasumwandlungspunkte kleiner als 0 °C, vorzugsweise kleiner als -20 °C besitzen.

**6.** Makromere nach mindestens einem der Ansprüche 1 bis 5,
dadurch gekennzeichnet,
daß die Basispolyester geradkettige oder verzweigte Alkylseitenketten von vorzugsweise 4 bis 18 Kohlenstoffatomen tragen.

**7.** Makromere nach einem der Ansprüche 1 bis 5,
dadurch gekennzeichnet,
daß in den Basispolyestern die Alkylseitenketten vorzugsweise verzweigt sind.

**8.** Makromere nach einem der vorangehenden Ansprüche,
dadurch gekennzeichnet,
daß in den Basispolyestern vor der Umsetzung mit Acrylatverbindungen die Hydroxylzahlen 10 bis 100, vorzugsweise 20 bis 60 mg KOH/g betragen.

**9.** Makromere nach Anspruch 1 mit Molekulargewichten von vorzugsweise 2.000 bis 5.000.

**10.** Verfahren zur Herstellung von strahlenvernetzbaren Makromeren auf der Basis von Acrylatgruppen oder Methacrylatgruppen tragenden Polyestern nach Anspruch 1 oder einem der Ansprüche 2 bis 9,
dadurch gekennzeichnet,

daß in erster Stufe ein Hydroxylgruppen enthaltender Basispolyester mit mittlerem Molekulargewicht von 1.000 bis 10.000 und bei 20 °C flüssigem Zustand durch Herstellung eines Hydroxylpolyesters mit über Estergruppen oder Etherbrücken von dritten oder höheren polyesterbildenden Funktionen gebundenen Alkylseitenketten mit 4 bis 36 C-Atomen in der Alkylgruppe durch Kondensation von Diolen und Dicarbonsäuren bzw. der polyesterbildenden Derivate oder Anhydride und Tricarbonsäuremonoalkylestern, Trimethylolpropan-monocarbonsäureestern und/oder Glycidylestern von gesättigten Monocarbonsäuren mit 4 bis 36 C-Atomen im Alkylrest bzw. der Monocarbonsäuren bei Temperaturen von 140 bis 230 °C mit einem molaren Überschuß von Diolen plus ggf. Glycidylestern gegenüber Dicarbonsäure bzw. deren Derivaten bzw. Anhydriden plus Tricarbonsäuremonoestern und Entfernung des überschüssigen Diols bei der Polykondensation, bis die OH-Zahl von 10 bis 100 und eine Säurezahl unter 1 erreicht ist und in zweiter Stufe Umsetzung von 30 bis 70 % der Hydroxylgruppen der Polyester mit Acrylverbindungen oder Methacrylverbindungen aus der Gruppe

Isocyanatoalkyl(meth-)acrylat und/oder
Addukten aus Diisocyanaten oder Polyisocyanaten oder Isocyanatopraepolymeren von Polyestern oder Polyethern mit niedrigem Molekulargewicht mit Hydroxylalkylacrylaten bzw. Hydroxyalkylmethacrylaten und/oder

Methyl-acrylamidoglycolat-methylether und/oder

nach Umsetzung von 30 bis 70 % der Hydroxylgruppen der Polyester mit Dicarbonsäure, Tricarbonsäure oder deren Anhydriden, die so gebildeten Carboxypolyester mit Glycidylacrylat oder Glycidylmethacrylat umgesetzt werden

und/oder Methacrylsäure oder Acrylsäure

durch Umsetzung mit 1,0 bis 1,1, Mol eines der Basispolyester je Mol der umzusetzenden OH-Gruppen bei 60 bis 150 °C und Drucken von 300 mbar bis Normaldruck zu den strahlenhärtbaren Makromeren.

**11.** Verwendung der Makromeren nach mindestens einem der Ansprüche 1 bis 9 als dauerklebrige Haftklebstoffe durch Vernetzung bzw. Härtung in dünner Schicht nach Auftrag auf flächigen Substraten durch Elektronenstrahlen oder, ggf. nach Zusatz von Photoinitiatoren, durch UV-Strahlen.

## Claims

**1.** A radiation-crosslinkable macromer based on polyesters which carry acrylic groups or methacrylic groups, characterized in that base polyesters comprising hydroxyl groups and having average molecular weights of from 1000 to 10,000, being in the liquid state at 20°C and comprising alkyl side chains of from 4 to 36 carbon atoms in the alkyl group, attached to the main chain via ester groups or ether bridges of third or higher polyester-forming functions, or polyesters comprising hydroxyl groups which are branched at the third or higher function, are reacted, to the extent of from 30 to 70% of the hydroxyl groups of the polyesters, with acrylate compounds or methacrylate compounds, using

isocyanatoalkyl (meth)acrylate and/or adducts of di- or triisocyanates or polyisocyanates or isocyanato prepolymers of polyesters or polyethers of low molecular weight with hydroxylalkyl acrylates and/or hydroxyalkyl methacrylates, and/or

methyl acrylamidoglycolate methyl ether and/or, after reaction of from 30 to 70% of the hydroxyl groups of the polyesters with a dicarboxylic acid, tricarboxylic acid or anhydrides thereof to give carboxyl polyesters, glycidyl acrylate or glycidyl methacrylate, and/or

methacrylic acid or acrylic acid or derivatives thereof.

**2.** A macromer according to claim 1, wherein that part of the hydroxyl groups of the polyesters which is not reacted with (meth)acrylate compounds is replaced wholly or partially by other reactively crosslinkable or unreactive groups.

**3.** A macromer according to claim 1, wherein that part of the hydroxyl groups of the polyesters which is not reacted with (meth)acrylate compounds is retained as hydroxyl groups.

**4.** A macromer according to at least one of claims 1 to 3, characterized in that tackifying resins, pigments, anti-ageing agents or fillers are present in addition.

**5.** A macromer according to at least one of claims 1 to 4, characterized in that the base polyesters possess glass transition points of lower than 0°C, preferably lower than -20°C.

**6.** A macromer according to at least one of claims 1 to 5, characterized in that the base polyesters carry straight-chain or branched alkyl side chains of preferably from 4 to 18 carbon atoms.

**7.** A macromer according to any one of claims 1 to 5, characterized in that the alkyl side chains in the base polyesters

are preferably branched.

8. A macromer according to any one of the preceding claims, characterized in that the hydroxyl numbers of the base polyesters prior to reaction with acrylate compounds are from 10 to 100 mg, preferably from 20 to 60 mg, of KOH/g.

9. A macromer according to claim 1, having a molecular weight of preferably 2000 to 5000.

10. A process for the preparation of a radiation-crosslinkable macromer based on polyesters which carry acrylate groups or methacrylate groups, according to claim 1 or any one of claims 2 to 9, characterized in that in a first step a base polyester comprising hydroxyl groups, having an average molecular weight of from 1000 to 10,000 and being in the liquid state at 20°C is prepared by preparing a hydroxy polyester which has alkyl side chains having 4 to 36 carbon atoms in the alkyl group and being attached via ester groups or ether bridges of third or higher polyester-forming functions, by condensation of diols and dicarboxylic acids and/or polyester-forming derivatives or anhydrides thereof and tricarboxylic acid monoalkyl esters, trimethylolpropanemonocarboxylic esters and/or glycidyl esters of saturated monocarboxylic acids having 4 to 36 carbon atoms in the alkyl radical and/or the monocarboxylic acids at temperatures from 140 to 230°C with a molar excess of diols plus, if desired, glycidyl esters with respect to dicarboxylic acid and/or derivatives and/or anhydrides thereof plus tricarboxylic monoesters and removal of the excess diol in the polycondensation, until the OH number is from 10 to 100 and an acid number of below 1 is reached, and in a second stage from 30 to 70% of the hydroxyl groups of the polyesters are reacted with acrylic compounds or methacrylic compounds from the group consisting of

isocyanatoalkyl (meth)acrylate and/or adducts of diisocyanates or polyisocyanates or isocyanatoprepolymers of polyesters or polyethers of low molecular weight with hydroxyalkyl acrylates and/or hydroxyalkyl methacrylates, and/or

methyl acrylamidoglycolate methyl ether, and/or

after reaction of from 30 to 70% of the hydroxyl groups of the polyesters with dicarboxylic acid, tricarboxylic acid or anhydrides thereof, the carboxy polyesters thus formed are reacted with glycidyl acrylate or glycidyl methacrylate,

and/or methacrylic acid or acrylic acid

by reaction with from 1.0 to 1.1 mol of one of the base polyesters per mole of OH groups to be reacted at from 60 to 150°C under pressures of from 300 mbar to atmospheric pressure to give the radiation-curable macromer.

11. The use of a macromer according to at least one of claims 1 to 9 as a contact adhesive with long-term adhesion by crosslinking or curing in a thin layer, after application to sheet-like substrates, by means of electron beams or, after addition of photoinitiators if desired, by means of UV rays.

## Revendications

1. Macromères réticulables sous l'effet d'un rayonnement, à base de polyesters portant des groupes acryle ou méthacryle, caractérisés en ce que l'on fait réagir avec des acrylates ou des méthacrylates des polyesters de base contenant des groupes hydroxyle ayant une masse moléculaire moyenne de 1000 à 10 000 et liquides à 20°C, qui contiennent des chaînes latérales alkyle ayant de 4 à 36 atomes de carbone dans le groupe alkyle, liées à la chaîne principale par l'intermédiaire de groupes ester ou de ponts éther de fonctions troisièmes ou supérieures formant des polyesters, ou encore des polyesters contenant des groupes hydroxy ramifiés sur la troisième fonction ou sur la fonction supérieure, la réaction portant sur 30 à 70 % des groupes hydroxyle des polyesters, auquel cas on utilise

un (méth)acrylate d'isocyanatoalkyle et/ou des produits d'addition de di- ou triisocyanates ou de polyisocyanates ou des isocyanatoprépolymères de polyesters ou de polyéthers à faible masse moléculaire avec des acrylates d'hydroxyalkyle ou des méthacrylates d'hydroxyalkyle, et/ou
l'éther méthylique de l'acryla»idoglycolate de méthyle et/ou, après réaction de 30 à 70 % des groupes hydroxyle des polyesters avec un acide dicarboxylique, un acide tricarboxylique ou leurs anhydrides pour donner des carboxypolyesters, de l'acrylate de glycidyle ou du méthacrylate de glycidyle, et/ou

de l'acide méthacrylique ou de l'acide acrylique ou leurs dérivés.

2. Macromères selon la revendication 1, dans lesquels la partie des groupes hydroxyle des polyesters qui n'a pas réagi avec les (méth)acrylates est en totalité ou en partie remplacée par d'autres groupes à réticulation réactive, ou non réactifs.

3. Macromères selon la revendication 1, dans lesquels la partie des groupes hydroxyle des polyesters qui n'a pas réagi avec les (méth)acrylates reste sous forme de groupes hydroxyle.

4. Macromères selon au moins l'une des revendications 1 à 3, caractérisés en ce qu'ils contiennent en outre des résines tackifiantes, des pigments, des agents de protection contre le vieillissement ou des matières de charge.

5. Macromères selon au moins l'une des revendications 1 à 4, caractérisés en ce que les polyesters de base ont une température de transition vitreuse inférieure à 0°C et de préférence inférieure à -20°C.

6. Macromères selon au moins l'une des revendications 1 à 5, caractérisés en ce que les polyesters de base portent des chaînes latérales alkyle ramifiées ou droites ayant de préférence de 4 à 18 atomes de carbone.

7. Macromères selon l'une des revendications 1 à 5, caractérisés en ce que, dans les polyesters de base, les chaînes latérales alkyle sont de préférence ramifiées.

8. Macromères selon l'une des revendications précédentes, caractérisés en ce que, dans les polyesters de base, l'indice d'hydroxyle, avant la réaction avec les acrylates, est de 10 à 100 et de préférence de 20 à 60 mg KOH/g.

9. Macromères selon la revendication 1, ayant une masse moléculaire de préférence de 2000 à 5000.

10. Procédé pour préparer des macromères réticulables sous l'effet d'un rayonnement, à base de polyesters portant des groupes acrylates ou méthacrylates selon la revendication 1 ou selon l'une des revendications 2 à 9, caractérisé en ce que, dans une première étape, on fait réagir un polyester de base contenant des groupes hydroxyle, ayant une masse moléculaire moyenne de 1000 à 10 000, et liquide à la température ambiante, par préparation d'un polyester hydroxylé comportant des chaînes latérales alkyle ayant de 4 à 36 atomes de carbone dans le groupe alkyle, chaînes liées par l'intermédiaire de groupes ester ou de ponts éther de fonctions troisièmes ou supérieures formant des polyesters, par condensation de diols et d'acides dicarboxyliques ou des dérivés formant des polyesters, ou d'anhydrides et d'esters monoalkyliques d'acides tricarboxyliques, d'esters d'acides monocarboxyliques et de triméthylolpropane et/ou d'esters glycidyliques d'acides monocarboxyliques saturés ayant de 4 à 36 atomes de carbone dans le fragment alkyle, ou des acides monocarboxyliques, à des températures de 140 à 230°C, avec un excès molaire de la somme des diols et éventuellement des esters glycidyliques par rapport à la somme de l'acide dicarboxylique ou de ses dérivés ou anhydrides et des monoesters d'acides tricarboxyliques, et élimination du diol en excès lors de la polycondensation jusqu'à ce que l'on arrive à un indice d'hydroxyle de 10 à 100 et à un indice d'acide inférieur à 1, et, dans une deuxième étape, on fait réagir de 30 à 70 % des groupes hydroxyle des polyesters avec des composés acryliques ou des composés méthacryliques choisis parmi l'ensemble comprenant :

les (méth)acrylates d'isocyanatoalkyle et/ou les produits d'addition de diisocyanates ou de polyisocyanates ou les isocyanatoprépolymères de polyesters ou de polyéthers à faible masse moléculaire, avec des acrylates d'hydroxyalkyle ou des méthacrylates d'hydroxyalkyle, et/ou
l'éther méthylique de l'acrylamidoglycolate de méthyle et/ou
après réaction de 30 à 70 % des groupes hydroxyle des polyesters avec un acide dicarboxylique, un acide tricarboxylique ou leurs anhydrides, on fait réagir les carboxypolyesters ainsi formés avec de l'acrylate de glycidyle ou du méthacrylate de glycidyle,
et/ou de l'acide méthacrylique ou de l'acide acrylique,
par réaction de 1,0 à 1,1 moles de l'un des polyesters de base, par mole des groupes OR réagir à une température de 60 à 150°C et sous des pressions comprises entre 300 mbar et la pression normale, jusqu'à ce qu'on arrive aux macromères durcissables sous l'effet d'un rayonnement.

11. Utilisation des macromères selon au moins l'une des revendications 1 à 9 comme substances adhésives à adhérence permanente, par réticulation ou durcissement en couche mince, après application sur des substrats-plans sous l'effet de rayonnements électroniques ou encore, éventuellement après addition de photoamorceurs, sous

l'effet de rayons UV.